# EUROPEAN PATENT APPLICATION

(11) **EP 4 568 295 A1**
(43) Date of publication of application: **11.06.2025**
(21) Application number: 23849076.7
(22) Date of filing: 26.06.2023
(51) Int. Cl.: H04W 4/02

(54) **UPLINK POSITIONING METHOD, DEVICE AND PROCESSOR-READABLE STORAGE MEDIUM**

(30) Priority: 03.08.2022 CN 202210926246
(71) Applicant: Datang Mobile Communications Equipment Co., Ltd., Beijing 100085 (CN)
(72) Inventor: SUN, Jiancheng, Beijing 100085 (CN); LI, Jianxiang, Beijing 100085 (CN); ZHANG, Dajun, Beijing 100085 (CN); QUAN, Haiyang, Beijing 100085 (CN)
(74) Representative: Maiwald GmbH
(86) International application number: PCT/CN2023/102373
(87) International publication number: WO 2024/027366

(57) **Abstract**

The present disclosure belongs to the technical field of communications. Disclosed are an uplink positioning method, a device and a processor-readable storage medium. The method comprises: a network device receiving an uplink positioning request message from an LMF; the network device determining a plurality of positioning measurement time instants and satellite information corresponding to each positioning measurement time instant; at each positioning measurement time instant, the network device instructing a satellite corresponding to the positioning measurement time instant to execute uplink positioning measurement to obtain a plurality of positioning measurement results; and the network device sending to the LMF the plurality of positioning measurement results, and the positioning measurement time instant corresponding to each positioning measurement result and/or the satellite information corresponding to each positioning measurement result.

## Description

### CROSS-REFERENCE TO RELATED APPLICATION

This application claims a priority to Chinese Patent Application No. 202210926246.6 filed on August 3, 2022, the disclosures of which are incorporated in their entirety by reference herein.

### TECHNICAL FIELD

The present disclosure relates to the field of communications technologies, and in particular, to an uplink positioning method and device, and a processor-readable storage medium.

### BACKGROUND

Currently, 4th Generation (4G) Mobile Communication Technology /Fifth Generation (5G) Mobile Communication Technology depends on a Radio Access Technology Dependent (RAT Dependent) positioning method, and is implemented by reception and transmission by a Transmission-Reception Point (TRP), and usually multiple TRPs are deployed in each cell.

However, in a satellite system, a specific network coverage is implemented by a satellite, and deployment of a TRP is only possible at a satellite end. In addition, in a satellite Internet system, the ground forms a coverage similar to a cellular network, especially for a low-orbit constellation, it is difficult to require that the UE always be within an effective coverage of multiple satellites, and it is difficult to realize multi-satellite positioning.

Therefore, the current 4G/5G RAT dependent positioning method is difficult to be applied to the satellite Internet system.

### SUMMARY

Embodiments of the present disclosure provide an uplink positioning method and device, and a processor-readable storage medium, to resolve a problem that a positioning method in the related art is difficult to be applied to a satellite Internet system.

An uplink positioning method is provided. The method includes: receiving, by a network device, an uplink positioning request message from a Location Management Function (LMF); determining, by the network device, a plurality of positioning measurement time instants and satellite information corresponding to each positioning measurement time instant; at each positioning measurement time instant, instructing, by the network device, a satellite corresponding to the positioning measurement time instant to perform uplink positioning measurement and obtain a plurality of positioning measurement results; and sending, by the network device to the LMF, the plurality of positioning measurement results and the positioning measurement time instant corresponding to each of the plurality of positioning measurement results and/or satellite information corresponding to each of the plurality of positioning measurement results.

Optionally, the satellite information includes one or more of the following: identification information of a satellite; location information of a satellite; transmission-reception point (TRP) information, wherein the TRP information includes identification information of one or more TRPs and location information of each TRP.

Optionally, the uplink positioning request message includes time information of uplink positioning measurement; wherein determining, by the network device, the plurality of positioning measurement time instants includes: determining, by the network device, the plurality of positioning measurement time instants based on the time information of the uplink positioning measurement.

Optionally, the time information of the uplink positioning measurement includes one or more of the following: one or more time instants of performing the uplink positioning measurement; time requirement information of the uplink positioning measurement.

Optionally, the time requirement information of the uplink positioning measurement includes one or more of the following: start time of the uplink positioning measurement; end time of the uplink positioning measurement; a time interval of the uplink positioning measurement; a quantity of uplink positioning measurements.

An uplink positioning method is provided. The method includes: sending an uplink positioning request message to a network device by a Location Management Function (LMF); receiving, by the LMF from the network device, a plurality of positioning measurement results and a positioning measurement time instant corresponding to each positioning measurement result and/or satellite information corresponding to each positioning measurement result; wherein the plurality of positioning measurement results are obtained through uplink positioning measurement performed by a satellite corresponding to the positioning measurement time instant which is instructed by the network device at each positioning measurement time instant of the plurality of positioning measurement time instants.

Optionally, the satellite information includes one or more of the following: identification information of the satellite; location information of the satellite; TRP information, wherein the TRP information includes identification information of one or more TRPs and location information of each TRP.

Optionally, the uplink positioning request message includes time information of uplink positioning measurement; the time information of the uplink positioning measurement is used by the network device to determine the plurality of positioning measurement time instants.

Optionally, the time information of the uplink positioning measurement includes one or more of the following: one or more time instants of performing the uplink positioning measurement; time requirement information of the uplink positioning measurement.

Optionally, the time requirement information of the uplink positioning measurement includes one or more of the following: start time of the uplink positioning measurement; end time of the uplink positioning measurement; a time interval of the uplink positioning measurement; a quantity of uplink positioning measurements.

A network device is provided. The network device includes a memory, a transceiver, and a processor, wherein, the memory is configured to store a computer program; the transceiver is configured to send and receive data under control of the processor; and the processor is configured to read the computer program in the memory and perform the following operations: receiving, by the network device, an uplink positioning request message from a Location Management Function (LMF); determining, by the network device, a plurality of positioning measurement time instants and satellite information corresponding to each positioning measurement time instant; at each positioning measurement time instant, indicating, by the network device, to a satellite corresponding to the positioning measurement time instant to perform uplink positioning measurement and obtain a plurality of positioning measurement results; and sending, by the network device to the LMF, the plurality of positioning measurement results and the positioning measurement time instant corresponding to each positioning measurement result and/or satellite information corresponding to each positioning measurement result.

Optionally, the satellite information includes one or more of the following: identification information of the satellite; location information of the satellite; TRP information, wherein the TRP information includes identification information of one or more TRPs and location information of each TRP.

Optionally, the uplink positioning request message includes time information of uplink positioning measurement; determining, by the network device, the plurality of positioning measurement time instants includes: determining, by the network device, the plurality of positioning measurement time instants based on the time information of the uplink positioning measurement.

Optionally, the time information of the uplink positioning measurement includes one or more of the following: one or more time instants of performing the uplink positioning measurement; time requirement information of the uplink positioning measurement.

Optionally, the time requirement information of the uplink positioning measurement includes one or more of the following: start time of the uplink positioning measurement; end time of the uplink positioning measurement; a time interval of the uplink positioning measurement; a quantity of uplink positioning measurements.

An LMF is provided. The LMF includes a memory, a transceiver, and a processor, wherein, the memory is configured to store a computer program; the transceiver is configured to send and receive data under control of the processor; and the processor is configured to read the computer program in the memory and perform the following operations: sends an uplink positioning request message to a network device by the LMF; receiving, by the LMF from the network device, a plurality of positioning measurement results and a positioning measurement time instant corresponding to each positioning measurement result and/or satellite information corresponding to each positioning measurement result; wherein the plurality of positioning measurement results are obtained through uplink positioning measurement performed by a satellite corresponding to the positioning measurement time instant which is instructed by the network device at each positioning measurement time instant of the plurality of positioning measurement time instants.

Optionally, the satellite information includes one or more of the following: identification information of the satellite; location information of the satellite; TRP information, wherein the TRP information includes identification information of one or more TRPs and location information of each TRP.

Optionally, the uplink positioning request message includes time information of uplink positioning measurement; the time information of the uplink positioning measurement is used by the network device to determine the plurality of positioning measurement time instants.

Optionally, the time information of the uplink positioning measurement includes one or more of the following: one or more time instants of performing the uplink positioning measurement; time requirement information of the uplink positioning measurement.

Optionally, the time requirement information of the uplink positioning measurement includes one or more of the following: start time of the uplink positioning measurement; end time of the uplink positioning measurement; a time interval of the uplink positioning measurement; a quantity of uplink positioning measurements.

A network device is provided. The network device includes: a first receiving module, configured to receiving, by the network device, an uplink positioning request message from a Location Management Function (LMF); a determining module, configured to determine, by the network device, a plurality of positioning measurement time instants and satellite information corresponding to each positioning measurement time instant; an execution module, configured to at each positioning measurement time instant, instruct, by the network device, a satellite corresponding to the positioning measurement time instant to perform uplink positioning measurement and obtain a plurality of positioning measurement results; a first sending module, configured to send, by the network device to the LMF, the plurality of positioning measurement results and the positioning measurement time instant corresponding to each of the plurality of positioning measurement results and/or satellite information corresponding to each of the plurality of positioning measurement results.

Optionally, the satellite information includes one or more of the following: identification information of a satellite; location information of a satellite; transmission-reception point (TRP) information, wherein the TRP information includes identification information of one or more TRPs and location information of each TRP.

Optionally, the uplink positioning request message includes time information of uplink positioning measurement; wherein determining, by the network device, the plurality of positioning measurement time instants includes: determining, by the network device, the plurality of positioning measurement time instants based on the time information of the uplink positioning measurement.

Optionally, the time information of the uplink positioning measurement includes one or more of the following: one or more time instants of performing the uplink positioning measurement; time requirement information of the uplink positioning measurement.

Optionally, the time requirement information of the uplink positioning measurement includes one or more of the following: start time of the uplink positioning measurement; end time of the uplink positioning measurement; a time interval of the uplink positioning measurement; a quantity of uplink positioning measurements.

A LMF device is provided. The LMF includes: a second sending module, configured to send an uplink positioning request message to a network device by a Location Management Function (LMF); a second receiving module, configured to receive, by the LMF from the network device, a plurality of positioning measurement results and a positioning measurement time instant corresponding to each positioning measurement result and/or satellite information corresponding to each positioning measurement result; wherein the plurality of positioning measurement results are obtained through uplink positioning measurement performed by a satellite corresponding to the positioning measurement time instant which is instructed by the network device at each positioning measurement time instant of the plurality of positioning measurement time instants.

Optionally, the satellite information includes one or more of the following: identification information of the satellite; location information of the satellite; TRP information, wherein the TRP information includes identification information of one or more TRPs and location information of each TRP.

Optionally, the uplink positioning request message includes time information of uplink positioning measurement; the time information of the uplink positioning measurement is used by the network device to determine the plurality of positioning measurement time instants.

Optionally, the time information of the uplink positioning measurement includes one or more of the following: one or more time instants of performing the uplink positioning measurement; time requirement information of the uplink positioning measurement.

Optionally, the time requirement information of the uplink positioning measurement includes one or more of the following: start time of the uplink positioning measurement; end time of the uplink positioning measurement; a time interval of the uplink positioning measurement; a quantity of uplink positioning measurements.

A processor-readable storage medium is provided. The processor-readable storage medium stores a computer program, and the computer program is configured to cause a processor to perform the uplink positioning method at the network device side, or the computer program is configured to cause a processor to perform the uplink positioning method at the LMF side.

In this embodiment of the present disclosure, the network device receives the uplink positioning request message sent by the LMF; and the network device determines the plurality of positioning measurement time instants and the satellite information corresponding to each positioning measurement resource, performs uplink positioning measurement according to the information to obtain a plurality of positioning measurement results, and sends the positioning measurement result to the LMF and the positioning measurement time instants and/or satellite information corresponding to each positioning measurement result. Since the satellite is in a moving state, the satellite is respectively located at a plurality of different positions corresponding to a plurality of positioning measurement time instants,, so that uplink positioning measurement is performed at a plurality of positioning measurement time instants, which can be equivalent to multi-TRP positioning measurement in a positioning method in the related art, so as to complete uplink positioning of the terminal position by means of a single satellite, and uplink positioning in a satellite Internet system.

### BRIEF DESCRIPTION OF THE DRAWINGS

FIG. 1A is a schematic flowchart of an LCS positioning service in the related art;
FIG. 1B is a schematic diagram of an uplink positioning procedure in the related art;
FIG. 1C is a schematic flowchart of configuring an SRS for a UE by a base station in an uplink positioning procedure in the related art;
FIG. 1D is a schematic structural diagram of a network architecture to which an embodiment of the present disclosure can be applied;
FIG. 2 is a first schematic flowchart of an uplink positioning method according to an embodiment of the present disclosure;
FIG. 3 is a second schematic flowchart of an uplink positioning method according to an embodiment of the present disclosure;
FIG. 4 is a first schematic structural diagram of a network device according to an embodiment of the present disclosure;
FIG. 5 is a schematic structural diagram of an LMF according to an embodiment of the present disclosure;
FIG. 6 is a second schematic structural diagram of a network device according to an embodiment of the present disclosure;
FIG. 7 is a second schematic structural diagram of an LMF according to an embodiment of the present disclosure.

### DETAILED DESCRIPTION

In order to make the technical problems, technical solutions and advantages to be solved by the present disclosure clearer, the following describes in detail with reference to the accompanying drawings and specific embodiments.

In the embodiments of the present disclosure, the term "and/or" describes an association relationship between associated objects, indicating that there may be three relationships, for example, A and/or B may indicate that A exists alone, A and B exist at the same time, and B exists alone. The character "/" generally indicates an "or" relationship between the associated objects.

In the embodiments of the present disclosure, the term "a plurality of" means two or more, and other quantifiers are similar.

The technical solutions in the embodiments of the present disclosure will be clearly and completely described below with reference to the accompanying drawings in the embodiments of the present disclosure. All other embodiments obtained by a person of ordinary skill in the art based on the embodiments of the present disclosure without creative efforts shall fall within the protection scope of the present disclosure.

Embodiments of the present disclosure provide a service data transmission method, a terminal, a network node, and a storage medium, to resolve a problem of reduced transmission rate of a terminal.

The method and the device are based on the same application concept, and because the method and the device solve the principle similar to the problem, the implementation of the apparatus and the method may refer to each other, and details are not described herein again.

The technical solutions provided in the embodiments of the present disclosure may be applicable to various systems, especially 6G systems. For example, the applicable system may be a Global System of Mobile Communication (GSM) system, a Code Division Multiple Access (CDMA) system, a Wideband Code Division Multiple Access (WCDMA) system, a Long Term Evolution (LTE) system, a Long Term Evolution Advanced (LTE-A) system, a Universal Mobile Telecommunication System (UMTS), a Worldwide Interoperability for Microwave Access (LTE-A) system, a 5G new radio (NR) system, a 6G system, and the like. The plurality of systems each include a terminal device and a network device. The system may further include a core network part, for example, an Evolved Packet System (EPS), a 5G system (5G System, 5 GS), and the like.

In order to better understand the technical solution of the present disclosure, the following content is first introduced:

### Location Services (LCS) Location Service Procedure

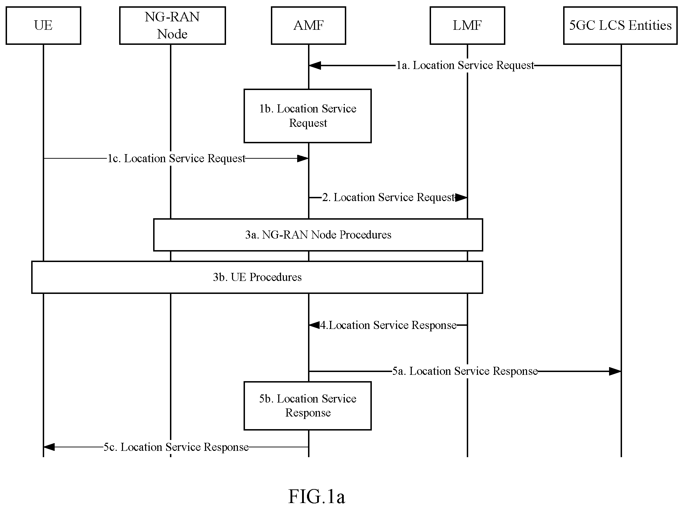

Referring to FIG. 1a, a LCS location service request from the UE/LCS Client/AMF is sent to the LMF through the AMF, so that the LMF location service is enabled. The LMF finally obtains the location information of the terminal through the steps 3a and 3b, and sends information such as the location of the terminal to the AMF through step 4.

### LTE Positioning Protocol (LPP) Uplink Positioning Procedure

RAT-related uplink positioning methods include Uplink Time Difference of Arrival (UL-TDOA) and Uplink Arrival Angle (UL-AoA). In these two positioning methods, the serving base station and the plurality of TRPs may simultaneously receive and measure sounding reference signals (SRS) from the UE based on the assistance data information acquired from the location server LMF, including measurements for the horizontal angle of arrival of the uplink transmission (Azimuth Angle Of Arrival, A-AoA), the vertical angle of arrival of the uplink transmission (Zenith Angle Of Arrival, Z-AoA), a relative time of arrival (RTOA), and a Reference Signal Receiving Power (RSRP). The serving base station and the plurality of TRPs transmit their measurement results to the location server LMF, and the LMF performs final location calculation based on the SRS measurement results and other configuration information.

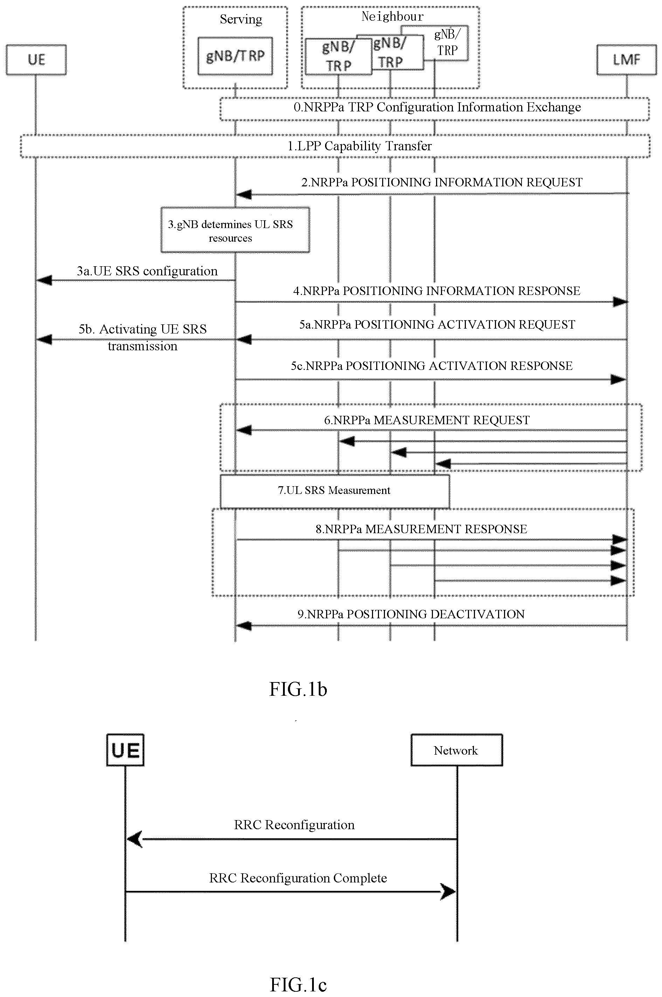

As shown in FIG. 1b, the specific uplink positioning procedure includes the following steps:
Step 0: the LMF may use a TRP Information Exchange Procedure triggered by the LMF, to obtain TRP information required for uplink positioning (UL AOA or UL TDOA).
Step 1: the LMF may obtain the positioning capability of the target UE based on an LPP protocol.
Step 2: the LMF sends NRPPa POSITIONING INFORMATION REQUEST signaling to the serving gNB to request uplink SRS configuration information of the target UE.
Step 3: the serving gNB determines the available uplink SRS resource allocation, and configures the uplink SRS resource set for the target UE through step 3a.
Step 4: the serving gNB reports the configuration information of the uplink SRS to the LMF through NRPPa POSITIONING INFORMATION RESPONSE signaling.
Step 5: the LMF may request to activate the SRS transmission of UE, and send an NRPPa POSITIONING ACTIVATION REQUEST message to the serving gNB of the target UE, including the SP SRS resource or the aperiodic SRS resource to be activated. The gNB then activates the uplink SRS transmission. The target UE starts to transmit the uplink SRS according to the uplink SRS resource configuration. A time domain behavior of the SRS is configured by the gNB.
Step 6: the LMF sends the uplink SRS configuration information to the selected plurality of gNBs through NRPPa MEASUREMENT REQLTEST signaling. The configuration information includes all information for uplink measurement performed by the gNB/TRP.
Step 7: each gNB configured in step 6 performs uplink SRS measurement.
Step 8: each gNB reports an uplink SRS measurement result to the LMF through NRPPa Measurement Response signaling.
Step 9: for the case of the SP SRS or the AP SRS, the LMF SENDS AN NRPPA POSITIONING DEACTIVATION message to the serving gNB to stop the transmission of the SP SRS or the AP SRS.

Referring to FIG. 1c, a process of configuring an SRS signal by a base station is shown in FIG. 1c.

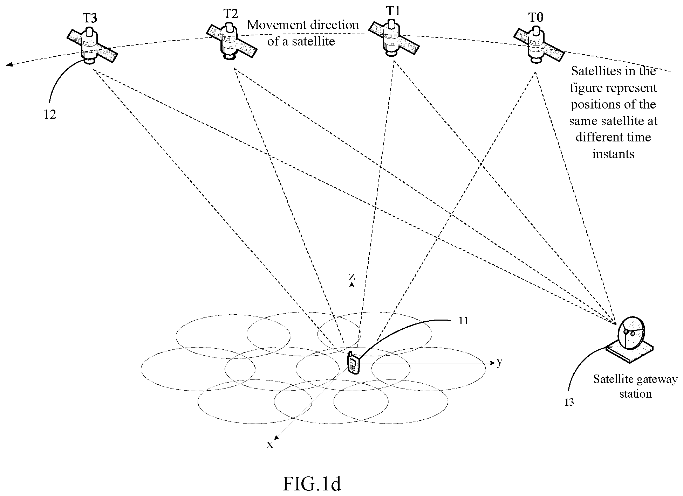

Referring to FIG. 1d, FIG. 1d is a schematic structural diagram of a network architecture to which an implementation of the present disclosure may be applied, as shown in FIG. 1d, the network architecture includes a terminal 11, a satellite 12, and a satellite gateway station 13, wherein, it should be noted that FIG. 1s shows a scenario in which a single satellite 12 is in different positions at different moments in a moving direction, that is, as shown in FIG. 1d, the satellite 12 is in different positions at T0, T1, T2, and T3, respectively.

In an actual application scenario, the satellite gateway station 13 may be disposed near the network device, and configured to obtain communication data from the network device, and then send the communication data to the satellite 12, and the satellite 12 sends the communication data to the terminal 11. Similarly, the communication data of the terminal may also be sent to the satellite gateway station 13 through the satellite 12, and then sent to the network device, to implement communication data transmission in the satellite Internet.

The terminal 11 in the embodiments of the present disclosure may be a device that provides voice and/or data connectivity to a user, a handheld device having a wireless connection function, or another processing device connected to a wireless modem. In different systems, the names of the terminal device may be different, for example, in a 5G system, the terminal device may be referred to as user equipment (UE). The wireless terminal device may communicate with one or more core networks (CN) via a radio access network (RAN), and the wireless terminal device may be a mobile terminal device, such as a mobile phone (or referred to as a "cellular" phone) and a computer having a mobile terminal device, for example, may be a portable, pocket-sized, handheld, computer built-in or vehicle-mounted mobile device, which exchanges language and/or data with a radio access network. For example, a Personal Communication Service (PCS) phone, a cordless telephone, a Session Initiated Protocol (SIP) phone, a Wireless Local Loop (WLL) station, a personal digital assistant (PDA), a Redcap terminal, and the like. The wireless terminal device may also be referred to as a system, a subscriber unit, a subscriber station, a mobile station, a mobile station, a remote station, an access point, a remote terminal, an access terminal, a user terminal, a user agent, and a user device, which are not limited in the embodiments of the present disclosure.

The network device in this embodiment of the present disclosure may be a base station, and the base station may include a plurality of cells that provide a service for the terminal. Depending on the specific application scenario, the base station may also be referred to as an access point, or may be a device in the access network that communicates with the wireless terminal device through one or more sectors on the air interface, or another name. The network device may be configured to replace the received over-the-air frame with an Internet Protocol (IP) packet as a router between the wireless terminal device and the rest of the access network, where the rest of the access network may include an Internet Protocol (IP) communication network. The network device may also coordinate attribute management of the air interface. For example, the network device in the embodiments of the present disclosure may be a network device (a Base Transceiver Station, BTS) in a Global System for Mobile Communications (GSM) or a Code Division Multiple Access (Code Division Multiple Access, CDMA), or may be a 5G base station in a Long Term Evolution (LTE) system, a base station in 6G, a Home Evolved Node B (Femto), a pico base station (Pico), or the like, which is not limited in the embodiments of the present disclosure. In some network structures, the network device may include a centralized unit (CU) and a distributed unit (DU), and the centralized unit and the distribution unit may also be geographically separated. In some network structures, the network device may include a Transmitting Receiving Point (TRP).

At present, a 4G/5G RAT dependent positioning method is implemented by means of transceiving by multiple TRPs, and a plurality of TRPs are usually deployed in each cell. However, in a satellite system, a specific network coverage is implemented by a satellite, and deployment of a TRP is only possible at a satellite end. In addition, in the satellite Internet system, the ground forms a coverage similar to a cellular network; especially for a low-orbit constellation, it is difficult to require that the UE always be within the effective coverage of multiple satellites, and it is difficult to realize multi-satellite positioning.

The current 4G/5G RAT dependent positioning method is difficult to be directly applied to a satellite Internet system, especially in a low-orbit constellation scenario, and it is necessary to design a positioning method based on a single satellite.

In addition, in a conventional RAT-dependent DL positioning method, the LMF knows the deployment condition of the TRP in the network in advance and the configuration of the positioning reference signal (PRS) of each TRP. The LMF determines, based on the DL positioning requirement and the current location of the serving cell of the UE, PRS signals of which TRPs are measured by the UE, and configures the related PRS to the UE through the LPP protocol.

However, in a low-orbit satellite system, a TRP and a satellite are integrated, a TRP may quickly move with a satellite, it is difficult for the LMF to determine a TRP satellite required for positioning a certain UE, and it is difficult to determine which PRS resources are configured for the UE.

The following describes in detail the uplink positioning method provided in the embodiments of the present disclosure through some embodiments and application scenarios thereof with reference to the accompanying drawings.

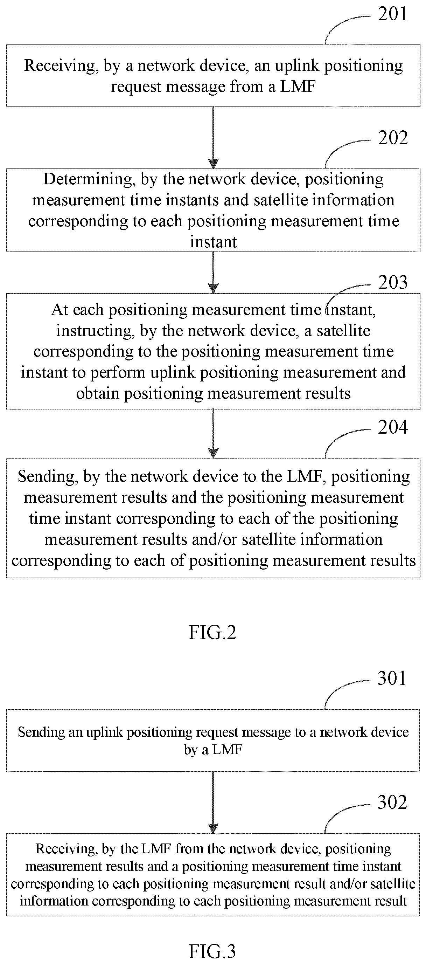

Referring to FIG. 2, an embodiment of the present disclosure provides an uplink positioning method, where the entity of performing the method is a network device, optionally, the network device may be a base station, and the method includes the following steps.
Step 201: a network device receives an uplink positioning request message from an LMF;
Step 202: the network device determines a plurality of positioning measurement time instants and satellite information corresponding to each positioning measurement time instant;
Step 203: at each positioning measurement time instant, the network device instructs a satellite corresponding to the positioning measurement time instant to perform uplink positioning measurement to obtain a plurality of positioning measurement results;
Step 204: the network device sends a plurality of positioning measurement results and positioning measurement time instants corresponding to the positioning measurement results and/or satellite information corresponding to each positioning measurement result to the LMF.

In this embodiment of the present disclosure, the network device receives the uplink positioning request message sent by the Location Management Function (LMF); and the network device determines the plurality of positioning measurement time instants and the satellite information corresponding to each positioning measurement resource, performs uplink positioning measurement according to the information to obtain a plurality of positioning measurement results, and sends the positioning measurement result to the LMF and the positioning measurement time instant and/or satellite information corresponding to each positioning measurement result. Since the satellite is in a moving state, the satellite is respectively located at a plurality of different positions at a plurality of positioning measurement time instants, , so that uplink positioning measurement is performed at a plurality of positioning measurement time instants, which can be equivalent to multi-TRP positioning measurement in a positioning method in the related art, so as to complete uplink positioning of the terminal position by means of a single satellite, and uplink positioning in a satellite Internet system is implemented.

The information about the positioning measurement resource related to the uplink positioning measurement may specifically be Sounding Reference Signal (SRS) information, and it should be noted that, in an actual application scenario, the network device can configure a corresponding SRS resource, provide the configuration information of the SRS resource to the terminal and the LMF, and specifically an interaction process of providing the configuration information of the SRS resource may be the interaction process of the positioning method in the related art and will not be repeated herein.

The uplink positioning request message may be an LTE Positioning Protocol (LPP) message, for example:
(1) MEASUREMENT REQUEST message on NRPPa interface; or
(2) a POSITIONING INFORMATION REQUEST message; or
(3) other newly defined NRPPa messages.

In a possible implementation, the satellite information includes one or more of the following:
(1) identification information of a satellite;
(2) location information of the satellite;
(3) TRP information, where the TRP information includes identification information of one or more TRPs and location information of each TRP, that is, related information of a satellite performing uplink positioning measurement at each positioning measurement time instant may be indicated by using an identifier and location information of a TRP provided in the satellite.

It should be noted that the position information of the satellite corresponds to the position of the satellite at the positioning measurement time instant, and if the LMF has ephemeris information, the satellite position at each time instant may be calculated by using the time instants and the ephemeris information.

Specifically, if the LMF knows the ephemeris, the satellite information may only include the satellite ID; if the LMF does not know the ephemeris, the satellite information may only include only the location information of the satellite, and certainly does not exclude that both information is provided.

In a possible implementation, that the network device determines the plurality of positioning measurement time instants specifically means that the network device itself determines the plurality of positioning measurement time instants, that is, the LMF only sends the uplink positioning request message to the network device to request to perform uplink positioning, and the specific positioning measurement time instants are completely determined by the network device itself, for example, the LMF does not provide any time information, and the base station determines, based on information such as ephemeris, a plurality of time instants to perform uplink positioning and allocates resources correspondingly.

In a possible implementation, the uplink positioning request message includes time information of uplink positioning measurement.

That the network device determines the plurality of positioning measurement time instants includes: that the network device determines the plurality of positioning measurement time instants based on the time information of the uplink positioning measurement.

In this embodiment of the present disclosure, the LMF provides some time information to the network device through the uplink positioning request message, to assist the network device in determining the plurality of positioning measurement time instants.

It should be noted that, when the LMF provides time information to assist the network device in determining a plurality of positioning measurement time instants, the LMF may specifically determine a specific time instant and inform the base station of the specific time instant, and correspondingly, the base station allocates resources, or the LMF may specifically specify the time information (for example, a time requirement related to positioning measurement), and the base station determines a specific time instant and correspondingly allocate resources.

In a possible implementation, the time information of the uplink positioning measurement includes one or more of the following:
(1) one or more time instants for performing uplink positioning measurement;
   it should be noted that when the time information for performing the uplink positioning measurement includes a plurality of time instants, the case may be that the LMF determines the specific time instants and informs the base station of the time instants; when the time information of the uplink positioning measurement includes one time instant, the case may be that the LMF requests the base station for multiple times and the LMF sends the determined plurality of positioning measurement time instants to the serving base station one by one;
(2) time requirement information of uplink positioning measurement;
   the time requirement information can reflect a positioning time requirement required by the uplink positioning service, so that the network device can determine a specific positioning measurement time instant according to the time requirement information; in a possible implementation, the time requirement information of the uplink positioning measurement includes one or more of the following:
   (1) start time of uplink positioning measurement;
   (2) end time of uplink positioning measurement;
   (3) a time interval of uplink positioning measurement, for example, an interval of two measurements is at least m seconds;
   (4) the number of uplink positioning measurements, for example, at least n measurements need to be completed.

Referring to FIG. 3, an embodiment of the present disclosure provides an uplink positioning method, where an entity of performing the method is an LMF, and the method includes the following steps.
Step 301: the LMF sends an uplink positioning request message to a network device;
Step 302: the LMF receives a plurality of positioning measurement results sent by the network device and a positioning measurement time instant corresponding to each positioning measurement result and/or satellite information corresponding to each positioning measurement result.

The plurality of positioning measurement results is obtained by performing uplink positioning measurement by the satellite corresponding to the positioning measurement time instants indicated by the network device at the plurality of positioning measurement time instants.

In this embodiment of the present disclosure, the network device receives the uplink positioning request message sent by the Location Management Function (LMF); and the network device determines the plurality of positioning measurement time instants and the satellite information corresponding to each positioning measurement resource, performs uplink positioning measurement according to the information to obtain a plurality of positioning measurement results, and sends the positioning measurement results to the LMF and the positioning measurement time instant and/or satellite information corresponding to each positioning measurement result. Since the satellite is in a moving state, the satellite may respectively be located at a plurality of different positions corresponding to a plurality of positioning measurement time instants, so that uplink positioning measurement is performed at a plurality of positioning measurement time instants, which can be equivalent to multi-TRP positioning measurement in a positioning method in the related art, so as to complete uplink positioning of the terminal position by means of a single satellite, and uplink positioning in a satellite Internet system is implemented.

It may be understood that the LMF may obtain the positioning calculation result based on the positioning calculation method in the related art and according to the plurality of positioning measurement results sent by the network device, the positioning measurement time instant corresponding to each positioning measurement result, and/or the satellite information corresponding to each positioning measurement result. The positioning calculation procedure is not specifically limited in the embodiments of the present disclosure.

The information about the positioning measurement resource related to the uplink positioning measurement may specifically be SRS information, and it should be noted that, in an actual application scenario, the network device can configure a corresponding SRS resource, provide the configuration information of the SRS resource to the terminal and the LMF, and the specific interaction process of providing the configuration information of the SRS resource may be the interaction process of the positioning method in the related art, and is not repeated herein.

The uplink positioning request message may be an LPP message, for example: (1) MEASUREMENT REQUEST message on the NRPPa interface; or (2) a POSITIONING INFORMATION REQUEST message; or (3) other newly defined NRPPa messages.

In a possible implementation, the satellite information includes one or more of the following: (1) identification information of a satellite; (2) location information of the satellite; (3) TRP information, where the TRP information includes identification information of one or more TRPs and location information of each TRP, that is, related information of a satellite performing uplink positioning measurement at each positioning measurement time instant may be indicated by using an identifier and location information of a TRP provided in the satellite.

It should be noted that the position information of the satellite corresponds to the position of the satellite at the positioning measurement time instant, and if the LMF has ephemeris information, the satellite position at each time instant may be calculated by using the time instants and the ephemeris information.

Specifically, if the LMF knows the ephemeris, the satellite information may only include the satellite ID; if the LMF does not know the ephemeris, the satellite information may only include only the location information of the satellite, and certainly does not exclude that both information is provided.

In a possible implementation, that the network device determines the plurality of positioning measurement time instants specifically means that the network device itself determines the plurality of positioning measurement time instants, that is, the LMF only sends the uplink positioning request message to the network device to request to perform uplink positioning, and the specific positioning measurement time instants are completely determined by the network device itself, for example, the LMF does not provide any time information, and the base station determines, based on information such as ephemeris, a plurality of time instants to perform uplink positioning and allocates resources correspondingly.

In a possible implementation, the uplink positioning request message includes time information of uplink positioning measurement.

That the network device determines the plurality of positioning measurement time instants includes: that the network device determines the plurality of positioning measurement time instants based on the time information of the uplink positioning measurement.

In this embodiment of the present disclosure, the LMF provides time information to the network device through the uplink positioning request message, to assist the network device in determining the plurality of positioning measurement time instants.

It should be noted that, when the LMF provides some time information to assist the network device in determining a plurality of positioning measurement time instants, the LMF may specifically determine a specific time instant and inform the base station of the specific time instant, and correspondingly, the base station allocates resources, or the LMF may specifically specify the time information (for example, a time requirement related to positioning measurement), and the base station determines a specific time instant and correspondingly allocate resources.

In a possible implementation, the time information of the uplink positioning measurement includes one or more of the following:
(1) one or more time instants for performing uplink positioning measurement;
   it should be noted that when the time information for performing the uplink positioning measurement includes a plurality of time instants, the case may be that the LMF determines the specific time instants and informs the base station of the time instants; when the time information of the uplink positioning measurement includes one time instant, the case may be that the LMF requests the base station for multiple times and the LMF sends the determined plurality of positioning measurement time instants to the serving base station one by one;
(2) time requirement information of uplink positioning measurement;
   the time requirement information can reflect a positioning time requirement required by the uplink positioning service, so that the network device can determine a specific positioning measurement time instant according to the time requirement information; in a possible implementation, the time requirement information of the uplink positioning measurement includes one or more of the following:
   (1) start time of uplink positioning measurement;
   (2) end time of uplink positioning measurement;
   (3) a time interval of uplink positioning measurement, for example, an interval of two measurements is at least m seconds;
   (4) the number of uplink positioning measurements, for example, at least n measurements need to be completed.

The following describes the uplink positioning method provided in the present disclosure by using a plurality of embodiments:
Embodiment 1: support to the UL positioning method in satellite Internet system (single satellite no-handover, LMF provides positioning time requirement information)

The LMF requests the base station to initiate an uplink positioning request of a certain UE, where the request includes the time requirement information of the positioning measurement described above (for example, to perform four measurements, the interval is not less than 5 seconds, and needs to be completed before the x moment).

The base station determines, based on a request of the LMF and/or information such as a current serving satellite of the UE, a serving cell, and an ephemeris, a plurality of specific time instants for completing the positioning measurement, and satellite information of satellite participating in positioning measurement at each time instant (the selected satellite may be a current serving satellite, or may be a satellite which is about to serve the UE, depending on a time decision of the base station on the positioning measurement).

At a related time instant of the specified positioning measurement, the base station enables the selected satellite to complete related UL positioning measurement, and feeds back a result to the LMF after all the measurements are completed.

The result includes specific measurement results, time information corresponding to each result, and satellite information corresponding to each result.

The LMF calculates the location of the UE based on the result fed back by the gNB.

Embodiment 2: support to the UL positioning method in a satellite Internet system (single satellite without handover, LMF indicates the specific positioning time)
The overall process is the same as that of Embodiment 1, and the main difference lies in that the base station determines, based on information such as a current serving satellite of the UE, a serving cell, combined ephemeris, and time information specified by the LMF, to complete UL positioning measurement satellite information at each time instant.

Embodiment 3: support to a UL positioning method in a satellite Internet system (UE performs inter-cell handover or even inter-satellite handover in a UL positioning measurement process, and the handover is a handover between cells under one base station, including intra-satellite and inter-satellite).

If inter-cell handover of the UE occurs (under the same base station, the same satellite, or different satellites) in the process of positioning measurement, the mechanism that the gNB determines that the specific positioning time instant is the same as that of the Embodiment 1 or the Embodiment 2, and but at different time instants, the cell or the satellite participating in the positioning process may change.

At each time instant, the gNB indicates a corresponding satellite participating in positioning measurement to complete uplink positioning measurement. After all the measurements are completed, the measurement result of each time instant and the corresponding satellite information participating in the uplink positioning measurement are fed back to the LMF.

The LMF calculates the position of the UE according to the above information to complete the UL positioning process.

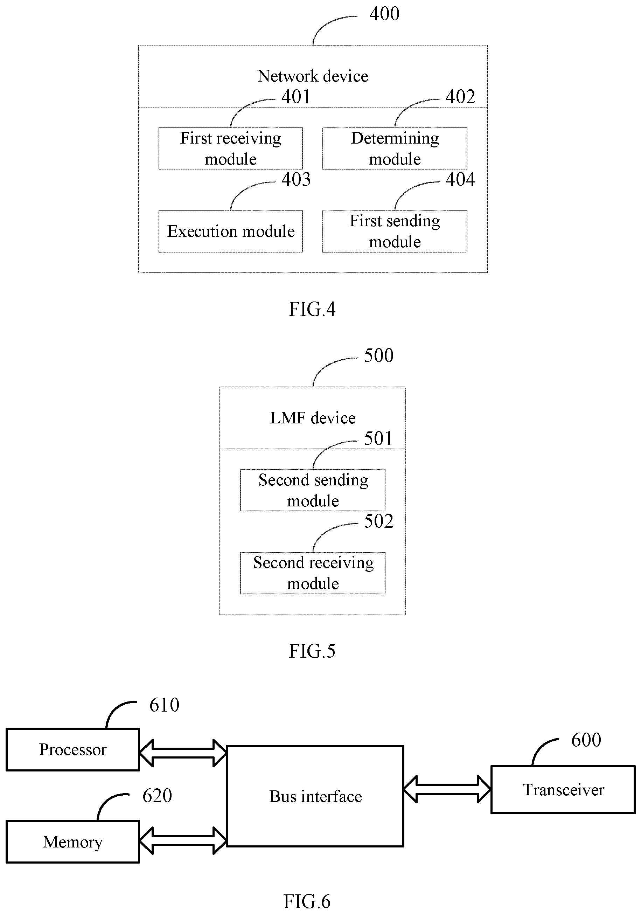

Referring to FIG. 4, an embodiment of the present disclosure further provides a network device 400, including: a first receiving module 401, configured to receive, by the network device, an uplink positioning request message from an LMF; a determining module 402, configured to determine, by the network device, a plurality of positioning measurement time instants and satellite information corresponding to each positioning measurement time instant; and an execution module 403, configured to at each positioning measurement time instant, instruct, by the network device, a satellite corresponding to the positioning measurement time instant to perform uplink positioning measurement and obtain a plurality of positioning measurement results; and a first sending module 404, configured to send, by the network device to the LMF, the plurality of positioning measurement results and the positioning measurement time instant corresponding to each of the plurality of positioning measurement results and/or satellite information corresponding to each of the plurality of positioning measurement results.

Optionally, the satellite information includes one or more of the following: identification information of a satellite; location information of a satellite; transmission-reception point (TRP) information, wherein the TRP information includes identification information of one or more TRPs and location information of each TRP.

Optionally, the uplink positioning request message includes time information of uplink positioning measurement; wherein determining, by the network device, the plurality of positioning measurement time instants includes: determining, by the network device, the plurality of positioning measurement time instants based on the time information of the uplink positioning measurement.

Optionally, the time information of the uplink positioning measurement includes one or more of the following: one or more time instants of performing the uplink positioning measurement; time requirement information of the uplink positioning measurement.

Optionally, the time requirement information of the uplink positioning measurement includes one or more of the following: start time of the uplink positioning measurement; end time of the uplink positioning measurement; a time interval of the uplink positioning measurement; a quantity of uplink positioning measurements.

Referring to FIG. 5, an embodiment of the present disclosure further provides an LMF device 500, including: a second sending module 501, configured to send an uplink positioning request message to a network device by the LMF; a second receiving module 502, configured to receive, by the LMF, a plurality of positioning measurement results sent by the network device and a positioning measurement time instant corresponding to each positioning measurement result and/or satellite information corresponding to each positioning measurement result; wherein the plurality of positioning measurement results are obtained through uplink positioning measurement performed by a satellite corresponding to the positioning measurement time instant which is instructed by the network device at each positioning measurement time instant of the plurality of positioning measurement time instants.

Optionally, the satellite information includes one or more of the following: identification information of the satellite; location information of the satellite; TRP information, wherein the TRP information includes identification information of one or more TRPs and location information of each TRP.

Optionally, the uplink positioning request message includes time information of uplink positioning measurement; the time information of the uplink positioning measurement is used by the network device to determine the plurality of positioning measurement time instants.

Optionally, the time information of the uplink positioning measurement includes one or more of the following: one or more time instants of performing the uplink positioning measurement; time requirement information of the uplink positioning measurement.

Optionally, the time requirement information of the uplink positioning measurement includes one or more of the following: start time of the uplink positioning measurement; end time of the uplink positioning measurement; a time interval of the uplink positioning measurement; a quantity of uplink positioning measurements.

Referring to FIG. 6, FIG. 6 is a structural diagram of a network device according to an embodiment of the present disclosure, as shown in FIG. 6, the network device includes a memory 620, a transceiver 600, and a processor 610.

The memory 620 is configured to store a computer program; the transceiver 600 is configured to send and receive data under the control of the processor 610; and the processor 610 is configured to read the computer program in the memory 620 and perform the following operations:
receiving, by the network device, an uplink positioning request message from a LMF; determining, by the network device, a plurality of positioning measurement time instants and satellite information corresponding to each positioning measurement time instant; at each positioning measurement time instant, indicating, by the network device, to a satellite corresponding to the positioning measurement time instant to perform uplink positioning measurement and obtain a plurality of positioning measurement results; and sending, by the network device to the LMF, the plurality of positioning measurement results and the positioning measurement time instant corresponding to each positioning measurement result and/or satellite information corresponding to each positioning measurement result.

In FIG. 6, the bus architecture may include any number of interconnected buses and bridges, and specifically, various circuits of one or more processors represented by the processor 610 and a memory represented by the memory 620 are linked together. The bus architecture may also link various other circuits, such as a peripheral device, a voltage regulator, and a power management circuit, which are well known in the art, and therefore are not further described herein. The bus interface provides an interface. The transceiver 600 may be a plurality of elements, including a transmitter and a receiver, and provides units for communicating with various other apparatuses on a transmission medium, where the transmission media include transmission media such as a wireless channel, a wired channel, and an optical cable. For different user equipment, the user interface 630 may also be an interface capable of being externally connected to a device needing to be internally connected, and the connected device includes but is not limited to a keypad, a display, a speaker, a microphone, a joystick, and the like.

The processor 610 is responsible for managing the bus architecture and general processing, and the memory 620 may store data used by the processor 600 when performing operations.

Optionally, the processor 610 may be a Central Processing Unit (CPU), an Application Specific Integrated Circuit (ASIC), a Field-Programmable Gate Array (FPGA), or a Complex Programmable Logic Device (CPLD), and the processor may also use a multi-core architecture.

The processor invokes the computer program stored in the memory, and is configured to perform any one of the methods provided in the embodiments of the present disclosure according to the obtained executable instruction. The processor and the memory may also be physically separated.

Optionally, the satellite information includes one or more of the following: identification information of the satellite; location information of the satellite; TRP information, wherein the TRP information includes identification information of one or more TRPs and location information of each TRP.

Optionally, the uplink positioning request message includes time information of uplink positioning measurement; determining, by the network device, the plurality of positioning measurement time instants includes: determining, by the network device, the plurality of positioning measurement time instants based on the time information of the uplink positioning measurement.

Optionally, the time information of the uplink positioning measurement includes one or more of the following: one or more time instants of performing the uplink positioning measurement; time requirement information of the uplink positioning measurement.

Optionally, the time requirement information of the uplink positioning measurement includes one or more of the following: start time of the uplink positioning measurement; end time of the uplink positioning measurement; a time interval of the uplink positioning measurement; a quantity of uplink positioning measurements.

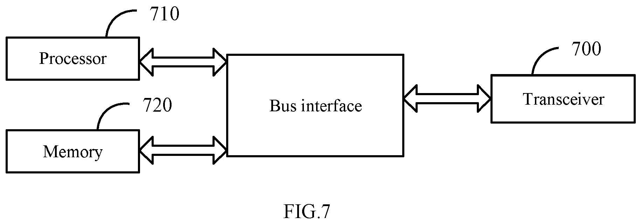

Referring to FIG. 7, FIG. 7 is a structural diagram of an LMF according to an embodiment of the present disclosure, as shown in FIG. 7, the LMF includes a memory 720, a transceiver 700, and a processor 710:

The memory 720 is configured to store a computer program; the transceiver 700 is configured to send and receive data under the control of the processor 710; and the processor 710 is configured to read the computer program in the memory 720 and perform the following operations:
sends an uplink positioning request message to a network device by the LMF; receiving, by the LMF from the network device, a plurality of positioning measurement results and a positioning measurement time instant corresponding to each positioning measurement result and/or satellite information corresponding to each positioning measurement result; wherein the plurality of positioning measurement results are obtained through uplink positioning measurement performed by a satellite corresponding to the positioning measurement time instant which is instructed by the network device at each positioning measurement time instant of the plurality of positioning measurement time instants.

In FIG. 7, the bus architecture may include any number of interconnected buses and bridges, and specifically, various circuits of one or more processors represented by the processor 710 and a memory represented by the memory 720 are linked together. The bus architecture may also link various other circuits, such as a peripheral device, a voltage regulator, and a power management circuit, which are well known in the art, and therefore are not further described herein. The bus interface provides an interface. The transceiver 700 may be a plurality of elements, including a transmitter and a receiver, and provides units for communicating with various other apparatuses on a transmission medium, where the transmission mediums include transmission media such as a wireless channel, a wired channel, and an optical cable. For different user equipment, the user interface 730 may also be an interface capable of being externally connected to the internal required device, and the connected device includes but is not limited to a keypad, a display, a speaker, a microphone, a joystick, and the like.

The processor 710 is responsible for managing the bus architecture and general processing, and the memory 720 may store data used by the processor 700 when performing operations.

Optionally, the processor 710 may be a Central Processing Unit (CPU), an Application Specific Integrated Circuit (ASIC), a Field-Programmable Gate Array (FPGA), or a Complex Programmable Logic Device (CPLD), and the processor may also use a multi-core architecture.

The processor invokes the computer program stored in the memory, and is configured to perform any one of the methods provided in the embodiments of the present disclosure according to the obtained executable instruction. The processor and the memory may also be physically separated.

Optionally, the satellite information includes one or more of the following: identification information of the satellite; location information of the satellite; TRP information, wherein the TRP information includes identification information of one or more TRPs and location information of each TRP.

Optionally, the uplink positioning request message includes time information of uplink positioning measurement; the time information of the uplink positioning measurement is used by the network device to determine the plurality of positioning measurement time instants.

Optionally, the time information of the uplink positioning measurement includes one or more of the following: one or more time instants of performing the uplink positioning measurement; time requirement information of the uplink positioning measurement.

Optionally, the time requirement information of the uplink positioning measurement includes one or more of the following: start time of the uplink positioning measurement; end time of the uplink positioning measurement; a time interval of the uplink positioning measurement; a quantity of uplink positioning measurements.

It should be noted that, the above-mentioned network device and LMF provided in the embodiments of the present disclosure can implement all method steps implemented in the foregoing method embodiments, and can achieve the same technical effect, and details of the same parts and beneficial effects as those in the method embodiments in this embodiment are not described herein again.

It should be noted that the division of the units in the embodiments of the present disclosure is schematic, and is merely a logical function division, and there may be another division manner in actual implementation. In addition, functional units in the embodiments of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on such understanding, the technical solutions of the present disclosure essentially or all or part of the technical solution may be embodied in the form of a software product, and the computer software product is stored in a storage medium, and includes several instructions for causing a computer device (which may be a personal computer, a server, or a network device) or a processor to perform all or part of the steps of the methods described in the embodiments of the present disclosure. The foregoing storage medium includes any medium that can store program code, such as a USB flash drive, a removable hard disk, a read-only memory (ROM), a random access memory (RAM), a magnetic disk, or an optical disk.

An embodiment of the present disclosure further provides a processor-readable storage medium, where the processor-readable storage medium stores a computer program, and the computer program is configured to cause the processor to perform an uplink positioning method, or the computer program is configured to cause the processor to perform an uplink positioning method.

The processor-readable storage medium may be any usable medium or data storage device accessible by a processor, including but not limited to a magnetic memory (for example, a floppy disk, a hard disk, a magnetic tape, a magneto-optical disk (DVD), a Blu-ray disk (BD), a High-Definition Versatile Disk (DVD), a Blu-ray disk (Blu-ray Disk, BD), a High-Definition Versatile Disk (EPROM), an Electrically Erasable Programmable Read Only Memory (EEPROM), a non-volatile memory (NAND Flash), a Solid State Disk (SSD)), and the like.

A person skilled in the art should understand that the embodiments of the present disclosure may be provided as a method, a system, or a computer program product. Therefore, the present disclosure may take the form of an entirely hardware embodiment, an entirely software embodiment, or an embodiment combining software and hardware aspects. Moreover, the present disclosure may use a form of a computer program product implemented on one or more computer-usable storage media (including but not limited to a disk memory, an optical memory, and the like) including computer-usable program codes.

The present disclosure is described with reference to the flowcharts and/or block diagrams of the method, the device (system), and the computer program product according to the embodiments of the present disclosure. It should be understood that each process and/or block in the flowcharts and/or block diagrams and a combination of processes and/or blocks in the flowcharts and/or block diagrams may be implemented by computer-executable instructions. These computer-executable instructions may be provided to a processor of a general-purpose computer, a special-purpose computer, an embedded processor, or other programmable data processing devices to generate a machine, so that the instructions executed by the processor of the computer or other programmable data processing devices generate means for implementing the functions specified in one or more flows of the flowcharts and/or one or more blocks in the block diagrams.

These processor-executable instructions may also be stored in a processor-readable memory that can direct a computer or other programmable data processing device to function in a particular manner, such that the instructions stored in the processor-readable memory produce an article of manufacture including an instruction device that implements the functions specified in one or more flows of the flowchart and/or one or more blocks of the block diagram.

These processor-executable instructions may also be loaded onto a computer or other programmable data processing device such that a series of operational steps are performed on the computer or other programmable device to produce a computer-implemented process, such that the instructions executed on the computer or other programmable device provide steps for implementing the functions specified in one or more flows of the flowchart and/or one or more blocks of the block diagram.

Evidently those skilled in the art can make various modifications and variations to the disclosure without departing from the spirit and scope of the disclosure. In this way, if these modifications and variations of the present disclosure fall within the scope of the claims of the present disclosure and their equivalent technologies, the present disclosure is also intended to include these modifications and variations.

## Claims

1. An uplink positioning method, comprising:
receiving, by a network device, an uplink positioning request message from a Location Management Function (LMF);
determining, by the network device, a plurality of positioning measurement time instants and satellite information corresponding to each positioning measurement time instant;
at each positioning measurement time instant, instructing, by the network device, a satellite corresponding to the positioning measurement time instant to perform uplink positioning measurement and obtain a plurality of positioning measurement results; and
sending, by the network device to the LMF, the plurality of positioning measurement results and the positioning measurement time instant corresponding to each of the plurality of positioning measurement results and/or satellite information corresponding to each of the plurality of positioning measurement results.

2. The method according to claim 1, wherein the satellite information comprises one or more of the following:
identification information of a satellite;
location information of a satellite;
transmission-reception point (TRP) information, wherein the TRP information comprises identification information of one or more TRPs and location information of each TRP.

3. The method according to claim 1, wherein the uplink positioning request message comprises time information of uplink positioning measurement;
wherein determining, by the network device, the plurality of positioning measurement time instants comprises:
determining, by the network device, the plurality of positioning measurement time instants based on the time information of the uplink positioning measurement.

4. The method according to claim 3, wherein the time information of the uplink positioning measurement comprises one or more of the following:
one or more time instants of performing the uplink positioning measurement;
time requirement information of the uplink positioning measurement.

5. The method according to claim 4, wherein the time requirement information of the uplink positioning measurement comprises one or more of the following:
start time of the uplink positioning measurement;
end time of the uplink positioning measurement;
a time interval of the uplink positioning measurement;
a quantity of uplink positioning measurements.

6. An uplink positioning method, comprising:
sending an uplink positioning request message to a network device by a Location Management Function (LMF);
receiving, by the LMF from the network device, a plurality of positioning measurement results and a positioning measurement time instant corresponding to each positioning measurement result and/or satellite information corresponding to each positioning measurement result;
wherein the plurality of positioning measurement results are obtained through uplink positioning measurement performed by a satellite corresponding to the positioning measurement time instant which is instructed by the network device at each positioning measurement time instant of the plurality of positioning measurement time instants.

7. The method according to claim 6, wherein the satellite information comprises one or more of the following:
identification information of the satellite;
location information of the satellite;
TRP information, wherein the TRP information comprises identification information of one or more TRPs and location information of each TRP.

8. The method according to claim 6, wherein the uplink positioning request message comprises time information of uplink positioning measurement;
the time information of the uplink positioning measurement is used by the network device to determine the plurality of positioning measurement time instants.

9. The method according to claim 8, wherein the time information of the uplink positioning measurement comprises one or more of the following:
one or more time instants of performing the uplink positioning measurement;
time requirement information of the uplink positioning measurement.

10. The method according to claim 9, wherein the time requirement information of the uplink positioning measurement comprises one or more of the following:
start time of the uplink positioning measurement;
end time of the uplink positioning measurement;
a time interval of the uplink positioning measurement;
a quantity of uplink positioning measurements.

11. A network device comprising a memory, a transceiver, and a processor, wherein, the memory is configured to store a computer program; the transceiver is configured to send and receive data under control of the processor; and the processor is configured to read the computer program in the memory and perform the following operations:
receiving, by the network device, an uplink positioning request message from a Location Management Function (LMF);
determining, by the network device, a plurality of positioning measurement time instants and satellite information corresponding to each positioning measurement time instant;
at each positioning measurement time instant, indicating, by the network device, to a satellite corresponding to the positioning measurement time instant to perform uplink positioning measurement and obtain a plurality of positioning measurement results; and
sending, by the network device to the LMF, the plurality of positioning measurement results and the positioning measurement time instant corresponding to each positioning measurement result and/or satellite information corresponding to each positioning measurement result.

12. The network device according to claim 11, wherein the satellite information comprises one or more of the following:
identification information of the satellite;
location information of the satellite;
TRP information, wherein the TRP information comprises identification information of one or more TRPs and location information of each TRP.

13. The network device according to claim 11, wherein the uplink positioning request message comprises time information of uplink positioning measurement;
determining, by the network device, the plurality of positioning measurement time instants comprises:
determining, by the network device, the plurality of positioning measurement time instants based on the time information of the uplink positioning measurement.

14. The network device according to claim 13, wherein the time information of the uplink positioning measurement comprises one or more of the following:
one or more time instants of performing the uplink positioning measurement;
time requirement information of the uplink positioning measurement.

15. The network device according to claim 14, wherein the time requirement information of the uplink positioning measurement comprises one or more of the following:
start time of the uplink positioning measurement;
end time of the uplink positioning measurement;
a time interval of the uplink positioning measurement;
a quantity of uplink positioning measurements.

16. An LMF, comprising a memory, a transceiver, and a processor, wherein, the memory is configured to store a computer program; the transceiver is configured to send and receive data under control of the processor; and the processor is configured to read the computer program in the memory and perform the following operations:
sends an uplink positioning request message to a network device by the LMF;
receiving, by the LMF from the network device, a plurality of positioning measurement results and a positioning measurement time instant corresponding to each positioning measurement result and/or satellite information corresponding to each positioning measurement result;
wherein the plurality of positioning measurement results are obtained through uplink positioning measurement performed by a satellite corresponding to the positioning measurement time instant which is instructed by the network device at each positioning measurement time instant of the plurality of positioning measurement time instants.

17. The LMF according to claim 16, wherein the satellite information comprises one or more of the following:
identification information of the satellite;
location information of the satellite;
TRP information, wherein the TRP information comprises identification information of one or more TRPs and location information of each TRP.

18. The LMF according to claim 16, wherein the uplink positioning request message comprises time information of uplink positioning measurement;
the time information of the uplink positioning measurement is used by the network device to determine the plurality of positioning measurement time instants.

19. The LMF according to claim 18, wherein the time information of the uplink positioning measurement comprises one or more of the following:
one or more time instants of performing the uplink positioning measurement;
time requirement information of the uplink positioning measurement.

20. The LMF according to claim 19, wherein the time requirement information of the uplink positioning measurement comprises one or more of the following:
start time of the uplink positioning measurement;
end time of the uplink positioning measurement;
a time interval of the uplink positioning measurement;
a quantity of uplink positioning measurements.

21. A network device, comprising:
a first receiving module, configured to receiving, by the network device, an uplink positioning request message from a Location Management Function (LMF);
a determining module, configured to determine, by the network device, a plurality of positioning measurement time instants and satellite information corresponding to each positioning measurement time instant;
an execution module, configured to at each positioning measurement time instant, instruct, by the network device, a satellite corresponding to the positioning measurement time instant to perform uplink positioning measurement and obtain a plurality of positioning measurement results;
a first sending module, configured to send, by the network device to the LMF, the plurality of positioning measurement results and the positioning measurement time instant corresponding to each of the plurality of positioning measurement results and/or satellite information corresponding to each of the plurality of positioning measurement results.

22. The network device according to claim 21, wherein the satellite information comprises one or more of the following:
identification information of a satellite;
location information of a satellite;
transmission-reception point (TRP) information, wherein the TRP information comprises identification information of one or more TRPs and location information of each TRP.

23. The network device according to claim 21, wherein the uplink positioning request message comprises time information of uplink positioning measurement;
wherein determining, by the network device, the plurality of positioning measurement time instants comprises:
determining, by the network device, the plurality of positioning measurement time instants based on the time information of the uplink positioning measurement.

24. The network device according to claim 23, wherein the time information of the uplink positioning measurement comprises one or more of the following:
one or more time instants of performing the uplink positioning measurement;
time requirement information of the uplink positioning measurement.

25. The network device according to claim 24, wherein the time requirement information of the uplink positioning measurement comprises one or more of the following:
start time of the uplink positioning measurement;
end time of the uplink positioning measurement;
a time interval of the uplink positioning measurement;
a quantity of uplink positioning measurements.

26. A LMF device, comprising:
a second sending module, configured to send an uplink positioning request message to a network device by a Location Management Function (LMF);
a second receiving module, configured to receive, by the LMF from the network device, a plurality of positioning measurement results and a positioning measurement time instant corresponding to each positioning measurement result and/or satellite information corresponding to each positioning measurement result;
wherein the plurality of positioning measurement results are obtained through uplink positioning measurement performed by a satellite corresponding to the positioning measurement time instant which is instructed by the network device at each positioning measurement time instant of the plurality of positioning measurement time instants.

27. The LMF device according to claim 26, wherein the satellite information comprises one or more of the following:
identification information of the satellite;
location information of the satellite;
TRP information, wherein the TRP information comprises identification information of one or more TRPs and location information of each TRP.

28. The LMF device according to claim 26, wherein the uplink positioning request message comprises time information of uplink positioning measurement;
the time information of the uplink positioning measurement is used by the network device to determine the plurality of positioning measurement time instants.

29. The LMF device according to claim 28, wherein the time information of the uplink positioning measurement comprises one or more of the following:
one or more time instants of performing the uplink positioning measurement;
time requirement information of the uplink positioning measurement.

30. The LMF device according to claim 29, wherein the time requirement information of the uplink positioning measurement comprises one or more of the following:
start time of the uplink positioning measurement;
end time of the uplink positioning measurement;
a time interval of the uplink positioning measurement;
a quantity of uplink positioning measurements.

31. A processor-readable storage medium, wherein the processor-readable storage medium stores a computer program, and the computer program is configured to cause a processor to perform the uplink positioning method according to any one of claims 1 to 5, or the computer program is configured to cause a processor to perform the uplink positioning method according to any one of claims 6 to 10.
